(19) Europäisches Patentamt / European Patent Office / Office européen des brevets

(11) **EP 4 734 165 A2**

(12) **EUROPEAN PATENT APPLICATION**

(43) Date of publication:
**29.04.2026 Bulletin 2026/18**

(21) Application number: **26161993.6**

(22) Date of filing: **03.03.2026**

(51) International Patent Classification (IPC):
**H01M 4/13** (2010.01)   **H01M 4/36** (2006.01)
**H01M 4/38** (2006.01)   **H01M 4/587** (2010.01)
**H01M 4/62** (2006.01)

(52) Cooperative Patent Classification (CPC):
**H01M 4/366; H01G 11/26; H01G 11/32;
H01G 11/50; H01M 4/13; H01M 4/386; H01M 4/587;
H01M 4/622;** H01M 2004/021; H01M 2004/025;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.03.2025 CN 202510241872**

(71) Applicant: **Ningde Amperex Technology Limited
Ningde, Fujian 352100 (CN)**

(72) Inventor: **ZHANG, Wenwen
Ningde City, Fujian Province 352100 (CN)**

(74) Representative: **Kraus & Lederer PartGmbB
Thomas-Wimmer-Ring 15
80539 München (DE)**

(54) **SECONDARY BATTERY AND ELECTRONIC APPARATUS**

(57) A secondary battery includes an electrolyte and a negative electrode plate, where a viscosity of the electrolyte is P MPa·s. A first material layer includes a first negative electrode active material, which includes no silicon element. A second material layer includes a second negative electrode active material and a polyurethane binder. Based on a mass of the second material layer, a mass percentage of the silicon element is $W_1$%, and a mass percentage of the polyurethane binder is $W_2$%. Along a thickness direction of the negative electrode plate, the negative electrode active material layer is provided with at least one groove, where a cross-sectional area of the groove is S $\mu m^2$, and a depth of the groove is H $\mu m$. Wherein $1 \leq W_1 \leq 50$, and $S = K_1 + 20W_1$; $400 \leq K_1 \leq 800$; $1 \leq W_2 \leq 10$, $2 \leq P \leq 8$, and $H = K_2 W_2 P/S$; $800 \leq K_2 \leq 1200$.

<u>**100**</u>

FIG. 1

EP 4 734 165 A2

## Description

### TECHNICAL FIELD

This application relates to the field of electrochemical technology, in particular to a secondary battery and an electronic apparatus.

### BACKGROUND

Currently, in the lithium battery industry, the gram capacity of graphite has reached 365 mAh/g, which approaches the theoretical gram capacity of 372 mAh/g, indicating that the gram capacity of the negative electrode active material has been utilized to the greatest extent. A positive electrode active material, lithium cobalt oxide, is already capable of reaching a voltage of 4.55 V, and the further increase of the voltage poses a great challenge to high voltage resistance of the electrolyte. In the industry, alternative negative electrode materials with a higher gram capacity are being searched currently. Silicon (Si) has a theoretical gram capacity up to 4200 mAh/g, which is ten times that of graphite, making it an ideal alternative material at present. However, the biggest challenge faced by silicon-based negative electrode materials is the swelling issue during cycling. When Si reacts with lithium ions (Li$^+$) to form Li$_x$Si, volume swelling is as high as 320%, and pores are produced in a contraction process, leading to deterioration of the electronic conductivity of the silicon-based negative electrode materials. During cycling, more negative electrode interfaces are exposed, increasing electrolyte consumption. Additionally, a negative electrode binder requires a larger bonding force to constrain the negative electrode active materials.

For Si negative electrodes, to address issues caused by high swelling ratios thereof, the following changes are made as compared to graphite systems: (1) polyacrylic acid-based binders form planar coating to suppress the problem of enlarged pores in the negative electrode plate caused by swelling during cycling, but planar coating also restricts Li$^+$ migration; (2) during cycling, a larger region of a negative electrode interface is exposed, so that a larger amount of negative electrode protection additive and fluoroethylene carbonate (FEC) need to be added to repair the interface, resulting in formation of a thicker initial film in an Si system, thereby increasing interface impedance; and (3) as a diamond structure, the silicon-based negative electrode materials are more difficult to diffuse compared to a graphite solid phase. Additionally, an alloying reaction between the silicon-based negative electrode material and Li results in larger interface impedance. These changes lead to deteriorated kinetic performance of the Si system compared to graphite, making the kinetic performance bottleneck of the Si system a factor that limits the development of Si materials. Therefore, how to improve the kinetic performance of Si-system secondary batteries is a technical problem to be urgently solved by those skilled in the art.

### SUMMARY

This application is intended to provide a secondary battery and an electronic apparatus, to improve the kinetic performance of the secondary battery and improve the cycling performance of the secondary battery.

It should be noted that, in the summary of this application, a lithium-ion battery is used as an example of a secondary battery to explain this application, but the secondary battery of this application is not limited to lithium-ion batteries. The specific technical solutions are as follows.

A first aspect of this application provides a secondary battery. The secondary battery includes an electrolyte and a negative electrode plate, where a viscosity of the electrolyte is P MPa·s. The negative electrode plate includes a negative electrode current collector and a negative electrode active material layer disposed on at least one surface of the negative electrode current collector. The negative electrode active material layer includes a first material layer and a second material layer. The first material layer is disposed between the negative electrode current collector and the second material layer. The first material layer includes a first negative electrode active material, and the first negative electrode active material includes no silicon element. The second material layer includes a second negative electrode active material and a polyurethane binder. The second negative electrode active material includes the silicon element. Based on a mass of the second material layer, a mass percentage of the silicon element is $W_1$%, and a mass percentage of the polyurethane binder is $W_2$%. Along a thickness direction of the negative electrode plate, the negative electrode active material layer is provided with at least one groove, a cross-sectional area of the groove is S $\mu m^2$, and a depth of the groove is H $\mu m$, where S and $W_1$ satisfy: $1 \leq W_1 \leq 50$, and $S=K_1+20W_1$; $K_1$ satisfies: $400 \leq K_1 \leq 800$; H, P, $W_2$, and S satisfy: $1 \leq W_2 \leq 10$, $2 \leq P \leq 8$, and $H=K_2W_2P/S$; and $K_2$ satisfies: $800 \leq K_2 \leq 1200$. Through the configuration of this application, the secondary battery provided by the first aspect of this application facilitates the intercalation and transport of lithium ions, ensures a good infiltration degree of the electrolyte to the negative electrode active material layer, and reduces the probability of lithium precipitation on a surface of the negative electrode plate, thereby improving the kinetic performance of the silicon-based secondary battery of this application. It also helps to suppress interface pulverization of the negative electrode plate, improving the cycling performance of the secondary battery.

In some embodiments of this application, $500 \leq K_1 \leq 700$. In some embodiments of this application, $900 \leq K_2 \leq 1100$.

In some embodiments of this application, $15 \leq W_1 \leq 30$. Controlling the mass percentage of the silicon element in the second material layer within the above range helps to reduce the probability of lithium precipitation on the surface of the negative electrode plate, further improving the kinetic performance of the secondary battery.

In some embodiments of this application, $2 \leq W_2 \leq 8$. Controlling the mass percentage of the polyurethane binder in the second material layer within the above range helps to reduce the probability of lithium precipitation on the surface of the negative electrode plate so that the kinetic performance of the secondary battery is further improved, and also helps to suppress interface pulverization of the negative electrode plate interface, improving the cycling performance of the secondary battery.

In some embodiments of this application, the polyurethane binder has a molecular formula of $(-NHCOO-)_n$, and the polyurethane binder has a molecular weight of m, where $10000 \leq m \leq 100000$. Selecting a polyurethane binder with a molecular formula and molecular weight within the above ranges helps to ensure that the polyurethane binder has a good bonding force and elasticity.

In some embodiments of this application, the first negative electrode active material includes at least one of artificial graphite, natural graphite, hard carbon, or soft carbon. Selecting the above types of first negative electrode active materials helps to ensure that the secondary battery has high use performance, such as high energy density and good cycling performance.

In some embodiments of this application, the second negative electrode active material includes a silicon-containing material, and the silicon-containing material includes at least one of pure silicon, a silicon-carbon compound, or a silicon-oxygen compound. The second negative electrode active material including a silicon-containing material selected from the above types of silicon-containing materials helps the second negative electrode active material to have a high gram capacity and a low compacted density, thereby helping to improve the kinetic performance of the secondary battery.

In some embodiments of this application, the silicon-containing material has an average particle size of 5 $\mu$m to 30 $\mu$m. Controlling the average particle size of the silicon-containing material within the above range helps to further improve the kinetic performance of the secondary battery while alleviating the interface pulverization issue of the negative electrode plate.

In some embodiments of this application, a spacing between two adjacent grooves is $\sigma$ $\mu$m, where $420 \leq \sigma \leq 3400$. The negative electrode active material layer has a thickness of y $\mu$m, where $30 \leq y \leq 100$. S, $\sigma$, and y satisfy: $1.4\% \leq S/(\sigma y) \times 100\% \leq 1.6\%$. By controlling the spacing between two adjacent grooves and the thickness of the negative electrode active material layer within the above ranges and ensuring that the cross-sectional area of the groove, the spacing, and the thickness of the negative electrode active material layer satisfy the relationship $1.4\% \leq S/(\sigma y) \times 100\% \leq 1.6\%$, the probability of the energy density of the secondary battery being affected is reduced while the kinetic performance and cycling performance of the secondary battery are improved.

In some embodiments of this application, the first material layer has a thickness of 25 $\mu$m to 95 $\mu$m, and the second material layer has a thickness of 5 $\mu$m to 50 $\mu$m. Controlling the thicknesses of the first material layer and the second material layer within the above ranges allows the secondary battery to have high energy density while having good kinetic performance and cycling performance.

A second aspect of this application provides an electronic apparatus, including the secondary battery described in any of the foregoing embodiments. Therefore, the electronic apparatus has good use performance.

This application has the following beneficial effects.

This application provides a secondary battery and an electronic apparatus. The secondary battery includes an electrolyte and a negative electrode plate, where a viscosity of the electrolyte is P MPa·s. The negative electrode plate includes a negative electrode current collector and a negative electrode active material layer disposed on at least one surface of the negative electrode current collector. The negative electrode active material layer includes a first material layer and a second material layer. The first material layer is disposed between the negative electrode current collector and the second material layer. The first material layer includes a first negative electrode active material, and the first negative electrode active material includes no silicon element. The second material layer includes a second negative electrode active material and a polyurethane binder, and the second negative electrode active material includes the silicon element. Based on a mass of the second material layer, a mass percentage of the silicon element is $W_1$%, and a mass percentage of the polyurethane binder is $W_2$%. Along a thickness direction of the negative electrode plate, the negative electrode active material layer is provided with at least one groove, a cross-sectional area of the groove is S $\mu m^2$, and a depth of the groove is H $\mu$m, where S and $W_1$ satisfy: $1 \leq W_1 \leq 50$, and $S = K_1 + 20W_1$; $K_1$ satisfies: $400 \leq K_1 \leq 800$; H, P, $W_2$, and S satisfy: $1 \leq W_2 \leq 10$, $2 \leq P \leq 8$, and $H = K_2 W_2 P/S$; and $K_2$ satisfies: $800 \leq K_2 \leq 1200$. In the secondary battery of this application, the negative electrode active material layer includes a first material layer which is located on an inner layer and includes no silicon element, and a second material layer which is located on a surface layer and includes the silicon element. A polyurethane binder is introduced into the second material layer including the silicon element, at least one groove is provided at the negative electrode active material layer, and the mass percentages of the silicon element and the polyurethane binder in the second material layer are controlled within the ranges provided in this application, so that the cross-sectional area and depth of the groove, the percentage of the silicon element, the percentage of the polyurethane binder, and the viscosity of the electrolyte satisfy the relationships provided in this application, which facilitates the intercalation and transport of lithium ions, ensures a good infiltration degree of the electrolyte to the negative electrode active material layer, and allows for low probability of lithium precipitation on the surface of the negative electrode plate, thereby improving the kinetic performance and cycling performance of the silicon-based secondary battery of this application. The electronic apparatus of this application has good use performance.

Certainly, implementing any product or method of this application does not necessarily achieve all the advantages described above simultaneously.

## BRIEF DESCRIPTION OF DRAWINGS

To more clearly illustrate the technical solutions of some embodiments of this application or the prior art, the drawings required for describing these embodiments or the prior art are briefly introduced below. It is apparent that the drawings described below are only some embodiments of this application, and those skilled in the art can obtain other embodiments based on these drawings.

FIG. 1 is a schematic diagram of a cross-sectional structure of a negative electrode plate along its thickness direction and length direction according to an embodiment of this application; and
FIG. 2 is a schematic diagram of a cross-sectional structure of the negative electrode plate in FIG. 1 along its width direction and length direction.

Description of reference signs:
100. negative electrode plate; 10. negative electrode current collector; 21. first material layer; 22. second material layer; 20. negative electrode active material layer; 30. groove; and 31. center line.

## DETAILED DESCRIPTION

The technical solutions in this application will be described clearly and completely below in conjunction with some embodiments and drawings of this application. Apparently, the described embodiments are only some embodiments rather than all embodiments of this application. All other embodiments obtained by those skilled in the art based on this application fall within the protection scope of this application.

It should be noted that, in the detailed description of this application, a lithium-ion battery is used as an example of a secondary battery to explain this application, but the secondary battery of this application is not limited to lithium-ion batteries.

A first aspect of this application provides a secondary battery. The secondary battery includes an electrolyte and a negative electrode plate, where a viscosity of the electrolyte is P MPa·s. The negative electrode plate includes a negative electrode current collector and a negative electrode active material layer disposed on at least one surface of the negative electrode current collector. The negative electrode active material layer includes a first material layer and a second material layer. The first material layer is disposed between the negative electrode current collector and the second material layer. The first material layer includes a first negative electrode active material, and the first negative electrode active material includes no silicon element. The second material layer includes a second negative electrode active material and a polyurethane binder. The second negative electrode active material includes the silicon element. Based on a mass of the second material layer, a mass percentage of the silicon element is $W_1$%, and a mass percentage of the polyurethane binder is $W_2$%. Along a thickness direction of the negative electrode plate, the negative electrode active material layer is provided with at least one groove, a cross-sectional area of the groove is $S$ $\mu m^2$, and a depth of the groove is $H$ $\mu m$, where $S$ and $W_1$ satisfy: $1 \leq W_1 \leq 50$, and $S = K_1 + 20W_1$; $K_1$ satisfies: $400 \leq K_1 \leq 800$, and further, $500 \leq K_1 \leq 700$; $H$, $P$, $W_2$, and $S$ satisfy: $1 \leq W_2 \leq 10$, $2 \leq P \leq 8$, and $H = K_2 W_2 P/S$; and $K_2$ satisfies: $800 \leq K_2 \leq 1200$, and further, $900 \leq K_2 \leq 1100$.

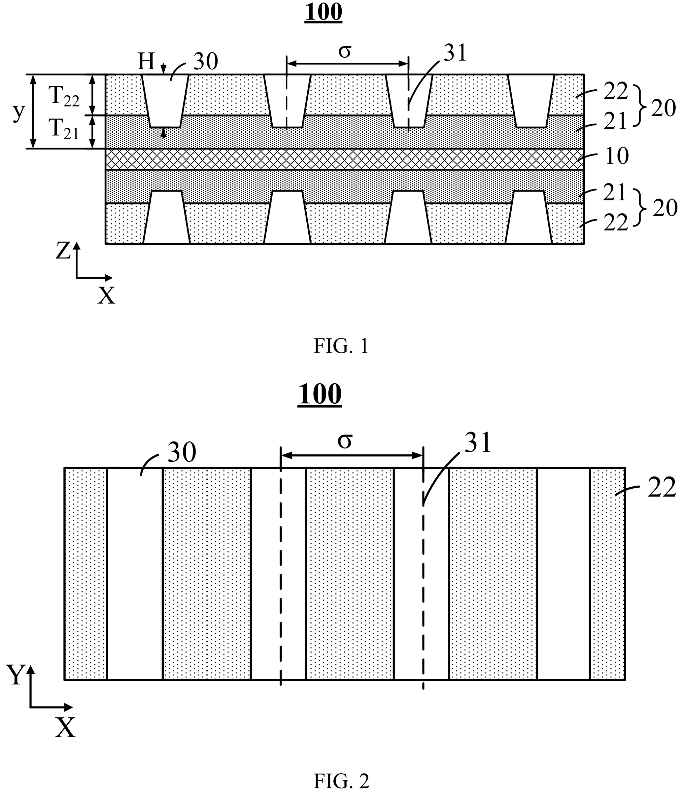

For ease of understanding, in this application, a length direction of the negative electrode plate is defined as X, a width direction thereof is defined as Y, and a thickness direction thereof is defined as Z. It should be understood that the above definitions of directions are for the convenience of describing the purpose of this application, and the directions defined in this application can be understood based on the relative positions of the drawings and actual product elements. Additionally, the width directions, length directions, and thickness directions of the negative electrode current collector and the negative electrode active material layer are the same as those of the negative electrode plate. As shown in FIG. 1 and FIG. 2, a negative electrode plate 100 includes a negative electrode current collector 10 and a negative electrode active material layer 20. The negative electrode active material layer 20 is disposed on two surfaces of the negative electrode current collector 10. The negative electrode active material layer 20 includes a first material layer 21 and a second material layer 22. The first material layer 21 is disposed between the negative electrode current collector 10 and the second material layer 22. Along the thickness direction Z of the negative electrode plate 100, the negative electrode active material layer 20 is provided with a plurality of grooves 30, and a depth of the grooves 30 is denoted as H. It can be understood that the depth H of the grooves 30 is less than a sum of thicknesses of a single first material layer 21 and a single second material layer 22, to be specific, the depth H of the grooves 30 is less than a thickness y of the negative electrode active material layer 20. Certainly, in some embodiments, the negative electrode active material layer 20 may be disposed on one surface of the negative electrode current collector 10. It should be noted that the shape, size, and number of the grooves in FIG. 1 and FIG. 2 are for illustrative purposes only and are not intended to limit this application. The "at least one" in "the negative electrode active material layer is provided with at least one groove" refers to one or more. The specific number of the grooves is not particularly limited in this application and may be selected by those skilled in the art according to actual needs as long as the purpose of this application can be achieved. The shape of the grooves is not particularly limited in this application as long as the purpose of this application can be achieved. For example, the shape may be at least one of a trapezoidal shape, an arc shape, a triangular shape, or a rectangular shape. In this application, the "cross-sectional area of the groove" refers to an area of a section obtained by sectioning a single groove along a length direction and a thickness direction of the negative electrode plate, and the "depth of the groove" refers to a vertical distance between the lowest point and the highest point of the groove along the thickness direction of the negative electrode plate.

For example, $W_1$ may be 1, 3, 5, 10, 12, 14, 16, 20, 22, 28, 30, 32, 34, 35, 37, 40, 41, 42, 45, 47, 50, or any value within a range defined by any two of these values. For example, $K_1$ may be 400, 430, 500, 520, 600, 660, 700, 750, 800, or any value within a range defined by any two of these values. When $W_1$ is less than 1, the mass percentage of the silicon element in the second material layer is too low, and the percentage of the silicon element in the second negative electrode active material is too low, causing insignificant capacity enhancement of the second material layer of the secondary battery by the second negative electrode active material, an insignificant change in reactive sites, and insignificant improvement in kinetic performance of the negative electrode plate by the second negative electrode active material. When $W_1$ is greater than 50, the mass percentage of the silicon element in the second material layer is too high, which does not meet practical application conditions. During charging and discharging of the secondary battery, the reaction between the silicon element and lithium ions causes volume swelling, and excessive pores are left in a contraction process, leading to deterioration of electronic conductivity of the second material layer, so that during a charge and discharge cycle of the secondary battery, more interfaces of the negative electrode plate are exposed to increase electrolyte consumption, and a larger amount of binder is required to constrain the second negative electrode active material to meet the bonding force and cohesive force requirements of the negative electrode plate, further affecting the kinetic performance of the negative electrode plate. The second negative electrode active material including the silicon element is a material that repels the electrolyte, and the presence of the silicon element in the second material layer reduces the affinity of the second material layer for the electrolyte. In addition, a higher percentage of the silicon element results in lower affinity of the second material layer for the electrolyte, which affects the infiltration degree of the electrolyte to the negative electrode active material layer, thereby increasing the probability of lithium precipitation on the surface of the negative electrode plate and reducing the kinetic performance of the secondary battery. The inventors have found through research that providing a groove on the negative electrode active material layer can improve an infiltration effect of the electrolyte. Specifically, when the percentage of the silicon element does not increase and the cross-sectional area of the groove is 400 $\mu m^2$ to 800 $\mu m^2$, the infiltration effect of the electrolyte to the negative electrode active material layer is optimal. When the percentage of the silicon element increases and the cross-sectional area of the groove increases by 20 $\mu m^2$ for every 1% increase in the mass percentage of the silicon element in the second material layer, the electrolyte can still maintain a good infiltration effect on the negative electrode active material layer. Therefore, based on the above findings, the inventors have controlled the cross-sectional area of the groove and the mass percentage of the silicon element in the second material layer to satisfy the relationship $S=K_1+20W_1$ and $400 \le K_1 \le 800$, thereby alleviating the issue of reduced infiltration degree of the electrolyte to the negative electrode active material layer caused by increase of the percentage of the silicon element.

For example, P may be 2, 3, 4, 5, 6, 7, 8, or any value within a range defined by any two of these values. For example, $W_2$ may be 1, 1.4, 2, 2.3, 3, 3.5, 4, 4.2, 5, 5.6, 6, 7.2, 7.8, 8, 8.2, 8.6, 9, 9.3, 10, or any value within a range defined by any two of these values. For example, $K_2$ may be 800, 830, 900, 940, 1000, 1080, 1100, 1150, 1200, or any value within a range defined by any two of these values. When P is less than 2, the viscosity of the electrolyte is too low, a good infiltration effect is achieved, but the solvent stability is low, which results in significant electrolyte consumption during cycling of the secondary battery and easily causes a lack of electrolyte in a later stage of the cycling, leading to "ion bridge disconnection" and thus affecting the cycling performance of the secondary battery. When P is greater than 8, the viscosity of the electrolyte is too high, which increases the resistance to lithium ion movement in the electrolyte, reduces the charge and discharge rate of the secondary battery, and also reduces the infiltration degree of the electrolyte to the negative electrode active material layer. The polyurethane binder has both good adhesivity and high elasticity, and is less likely to reach its yield strength during swelling and contraction of the second negative electrode active material including the silicon element, helping to alleviate interface pulverization of the negative electrode plate, thereby improving the cycling performance of the secondary battery. However, the polyurethane binder is a material that repels the electrolyte, which to some extent affects the infiltration degree of the electrolyte to the second material layer and easily affects the reactivity at an interface of the negative electrode active material layer, impacting the kinetic performance of the secondary battery. When $W_2$ is less than 1, the percentage of the polyurethane binder in the second material layer is too low, so that the advantages in bonding force and high elasticity are not fully utilized, and the probability of binder pulverization caused by swelling of the second negative electrode active material particles including the silicon element is high, which is not conducive to alleviate interface pulverization of the negative electrode plate. When $W_2$ is greater than 10, the percentage of the polyurethane binder in the second material layer is too high, which reduces the infiltration degree of the electrolyte to the second material layer and results in an excessively large coating degree of the negative electrode active material, causing difficulty in lithium intercalation, thereby increasing the probability of lithium precipitation on the surface of the negative electrode plate and deteriorating the kinetic performance of the secondary battery. A higher viscosity of the electrolyte results in a lower infiltration degree of the electrolyte to the negative electrode active material layer. A higher percentage of the polyurethane binder results in a lower infiltration degree of the electrolyte to the second material layer. Providing a groove on the negative electrode active material layer can increase the infiltration degree of the electrolyte to the negative electrode active material layer, and the infiltration effect of the electrolyte is related to both the cross-sectional area and depth of the groove. Generally, when the depth of the groove is constant, a larger cross-sectional area results in better infiltration improvement of the electrolyte; and when the cross-sectional area is constant, a larger depth of the groove results in better infiltration improvement of the electrolyte. The inventors have found through extensive research that when the depth of the groove, the viscosity of the electrolyte, the mass percentage of the polyurethane binder, and the cross-sectional area of the groove are controlled to satisfy the relationship $H=K_2W_2P/S$ and $800 \le K_2 \le 1200$, the issue of reduced infiltration degree of the electrolyte to the negative electrode active material layer caused by an increase in the viscosity of the electrolyte and/or in the mass percentage of the polyurethane binder can be alleviated through the groove provided in this application. Specifically, under a condition that the viscosity of the electrolyte and the cross-sectional area of the groove are constant, when the depth of the groove increases by 800 to 1200 times as the mass percentage of the polyurethane binder in the second material layer increases by 1%, the electrolyte can still maintain a good infiltration effect on the negative electrode active material layer.

In the secondary battery of this application, the negative electrode active material layer includes a first material layer including no silicon element and a second material layer including the silicon element. Since the second material layer is in contact with a cold-pressing roller during preparation of the negative electrode plate, the second material layer experiences the largest force, and a dense layer is generally formed on a surface of the second material layer away from the negative electrode current collector. Additionally, along a thickness direction of the negative electrode active material layer, lithium ions are transported from the surface away from the negative electrode current collector to a surface close to the negative electrode current collector, with an ion concentration decreasing from high to low. The surface of the second material layer away from the negative electrode current collector requires a larger porosity to assist lithium ion transport. In this application, the second material layer includes a second negative electrode active material with the silicon element, which, compared to the first negative electrode active material including no silicon element in the first material layer, generally has a lower powder compacted density, for example, a powder compacted density of existing silicon-carbon materials is about 2.0 g/cm$^3$, while a powder compacted density of existing graphite materials is about 2.3 g/cm$^3$. Therefore, the second material layer has a lower compacted density than the first material layer, so that the second material layer has a larger porosity than the first material layer to assist lithium ion transport, thereby helping to improve the kinetic performance of the secondary battery. During the first cycle of formation of the secondary battery, the second negative electrode active material including the silicon element in the second material layer on the surface layer undergoes greater swelling and contraction compared to the first negative electrode active material, which results in more pores in the second material layer of the negative electrode plate, facilitating lithium ion transport, thereby helping to improve the kinetic performance of the secondary battery. Compared to the first negative electrode active material including no silicon element, the second negative electrode active material including the silicon element has a higher gram capacity. Due to concentration polarization, the lithium ion concentration in the second material layer is higher, which is more conducive to lithium intercalation, improving the kinetic performance of the secondary battery. By introducing a polyurethane binder in the second material layer including the silicon element in the negative electrode plate, providing at least one groove in the negative electrode active material layer, controlling the mass percentages of the silicon element and the polyurethane binder in the second material layer within the ranges provided in this application, and ensuring that the cross-sectional area and depth of the groove, the percentage of the silicon element, the percentage of the polyurethane binder, and the viscosity of the electrolyte satisfy the relationships provided in this application, the high elasticity of the polyurethane binder is fully utilized, and the polyurethane binder is almost impossible to reach its yield strength during swelling and contraction of the second negative electrode active material including the silicon element, mitigating binder pulverization caused by swelling of the second negative electrode active material particles including the silicon element. The introduction of the polyurethane binder also suppresses the swelling of the second negative electrode active material. The groove can alleviate the impact of the silicon element and the polyurethane binder on the infiltration degree of the electrolyte, ensuring a good infiltration degree of the electrolyte to the negative electrode active material layer.

In summary, through the configuration of this application, the secondary battery provided by the first aspect of this application facilitates the intercalation and transport of lithium ions, ensures a good infiltration degree of the electrolyte to the negative electrode active material layer, and reduces the probability of lithium precipitation on a surface of the negative electrode plate, thereby improving the kinetic performance of the silicon-based secondary battery of this application. It also helps to suppress interface pulverization of the negative electrode plate, improving the cycling performance of the secondary battery.

This application does not impose particular restrictions on a method for controlling the viscosity of the electrolyte, as long as the purpose of this application can be achieved. For example, the method can be implemented by controlling the type of electrolyte.

In some embodiments of this application, $15 \leq W_1 \leq 30$. For example, $W_1$ may be 15, 16, 18, 20, 21, 23, 24, 26, 27, 28, 29, 30, or any value within a range defined by any two of these values. By controlling the mass percentage of the silicon element in the second material layer within the above range, the swelling and contraction during the cycling of the secondary battery result in a high porosity in the second material layer while the second negative electrode active material provides a high capacity, facilitating an increase in transport rate of lithium ions and further reducing the probability of lithium precipitation on a surface of the negative electrode plate, thereby further improving the kinetic performance of the secondary battery.

In some embodiments of this application, $2 \leq W_2 \leq 8$. For example, $W_2$ may be 2, 2.3, 3, 3.5, 4, 4.2, 5, 5.6, 6, 7.2, 7.8, 8, or any value within a range defined by any two of these values. Controlling the mass percentage of the polyurethane binder in the second material layer within the above range helps to reduce the impact of the polyurethane binder on the infiltration degree of the electrolyte while the high elasticity of the polyurethane binder is utilized, thereby improving the affinity of the negative electrode active material layer for the electrolyte and improving the infiltration effect of the electrolyte to the negative electrode active material layer. This helps to reduce the probability of lithium precipitation on a surface of the negative electrode plate so that the kinetic performance of the secondary battery is further improved, and also helps to suppress interface pulverization of the negative electrode plate, improving the cycling performance of the secondary battery.

In some embodiments of this application, the polyurethane binder has a molecular formula of $(-NHCOO-)_n$, and the polyurethane binder has a molecular weight of m, where $10000 \leq m \leq 100000$. The "molecular weight" refers to a weight-average molecular weight, measured in g/mol. Selecting a polyurethane binder with a molecular formula and molecular weight within the above ranges helps to ensure that the polyurethane binder has a good bonding force and elasticity. Applying the polyurethane binder to the negative electrode plate helps to suppress interface pulverization of the negative electrode plate, improving the cycling performance of the secondary battery.

This application does not impose particular restrictions on a method for controlling the molecular weight of the polyurethane binder, as long as the purpose of this application can be achieved. For example, commercially available polyurethane binders with different molecular weights can be selected, and the molecular weight of the polyurethane binder is determined and a polyurethane binder with the required molecular weight is selected in combination with a test method for the "Molecular weight test of polyurethane binder" in this application.

In some embodiments of this application, the first negative electrode active material includes at least one of artificial graphite, natural graphite, hard carbon, or soft carbon. These types of materials have high gram capacity and good safety performance and cycling performance. Selecting the above types of first negative electrode active materials helps to ensure that the secondary battery has high use performance, such as high energy density and good cycling performance and safety performance.

In some embodiments of this application, the second negative electrode active material includes a silicon-containing material. The silicon-containing material includes at least one of pure silicon, a silicon-carbon compound, or a silicon-oxygen compound. The second negative electrode active material including a silicon-containing material selected from above types of silicon-containing materials helps the second negative electrode active material to have a high gram capacity and a low compacted density, thereby helping to improve the kinetic performance of the secondary battery.

In some embodiments of this application, the second negative electrode active material includes a silicon-containing material and a carbon material, where the carbon material includes at least one of artificial graphite, natural graphite, hard carbon, or soft carbon. This application does not impose particular restrictions on a mass ratio of the silicon-containing material to the carbon material in the second negative electrode active material, as long as the purpose of this application can be achieved.

In some embodiments of this application, the silicon-containing material has an average particle size of 5 $\mu$m to 30 $\mu$m. For example, the average particle size of the silicon-containing material may be 5 $\mu$m, 8 $\mu$m, 10 $\mu$m, 12 $\mu$m, 15 $\mu$m, 17 $\mu$m, 20 $\mu$m, 22 $\mu$m, 25 $\mu$m, 29 $\mu$m, 30 $\mu$m, or any value within a range defined by any two of these values. Controlling the average particle size of the silicon-containing material within the above range enables the silicon-containing material to have high reactivity and helps to ensure that the second material layer has more pores to assist lithium ion transport, thereby further improving the kinetic performance of the secondary battery while improving the cycling performance of the secondary battery.

This application does not impose particular restrictions on a method for controlling the average particle size of the silicon-containing material, as long as the purpose of this application can be achieved. For example, the method can be implemented by directly purchasing a silicon-containing material, and the average particle size of the silicon-containing material is determined and a silicon-containing material with the required average particle size is selected in combination with a test method in the "Average particle size test of silicon-containing material" in this application; or the method can be implemented through crushing, grinding, ball milling, or the like.

In some embodiments of this application, a spacing between two adjacent grooves is $\sigma$ $\mu$m, where $420\leq\sigma\leq3400$. The negative electrode active material layer has a thickness of y $\mu$m, where $30\leq y\leq100$. S, $\sigma$, and y satisfy: $1.4\%\leq S/(\sigma y)\times100\%\leq1.6\%$. The "spacing between two adjacent grooves" refers to a minimum distance between center lines of two adjacent grooves, where the "center line" refers to a line used to indicate the center of the groove, that is, a set of line segments representing the symmetrical center of the groove. As shown in FIG. 1 and FIG. 2, a minimum distance between center lines 31 of two adjacent grooves 30, which is the spacing, is denoted as $\sigma$. As shown in FIG. 1, a thickness of the negative electrode active material layer 20 is denoted as y. It should be noted that the thickness of the negative electrode active material layer refers to a thickness of a single negative electrode active material layer. For example, $\sigma$ may be 420, 430, 560, 700, 900, 1000, 1200, 1400, 1600, 1830, 2000, 2200, 2400, 2500, 2680, 2800, 2900, 3100, 3220, 3400, or any value within a range defined by any two of these values. For example, y may be 30, 40, 50, 60, 65, 70, 72, 77, 80, 82, 90, 95, 100, or any value within a range defined by any two of these values. By controlling the spacing between two adjacent grooves and the thickness of the negative electrode active material layer within the above ranges and ensuring that the cross-sectional area of the groove, the spacing, and the thickness of the negative electrode active material layer satisfy the relationship $1.4\%\leq S/(\sigma y)\times100\%\leq1.6\%$, the impact on the thickness of the negative electrode plate caused by the provision of the groove on the negative electrode active material layer is reduced, and the overall compacted density of the negative electrode plate is supplemented. This reduces the probability of the energy density of the secondary battery being impacted while improving the kinetic performance and cycling performance of the secondary battery.

In some embodiments of this application, the first material layer has a thickness of 25 $\mu$m to 95 $\mu$m, and the second material layer has a thickness of 5 $\mu$m to 50 $\mu$m. As shown in FIG. 1, the thickness of the first material layer 21 is denoted as $T_{21}$, and the thickness of the second material layer 22 is denoted as $T_{22}$. It should be noted that the thickness of the first material layer refers to a thickness of a single first material layer, and the thickness of the second material layer refers to a thickness of a single second material layer. For example, the thickness of the first material layer may be 25 $\mu$m, 30 $\mu$m, 36 $\mu$m, 46 $\mu$m, 50 $\mu$m, 55 $\mu$m, 60 $\mu$m, 70 $\mu$m, 75 $\mu$m, 88 $\mu$m, 95 $\mu$m, or any value within a range defined by any two of these values. For example, the thickness of the second material layer may be 5 $\mu$m, 10 $\mu$m, 15 $\mu$m, 21 $\mu$m, 26 $\mu$m, 30 $\mu$m, 36 $\mu$m, 40 $\mu$m, 42 $\mu$m, 46 $\mu$m, 50 $\mu$m, or any value within a range defined by any two of these values. Controlling the thicknesses of the first material layer and the second material layer within the above ranges facilitates cooperation between the first material layer including no silicon element and the second material layer including the silicon element and allows the second material layer to have more pores than the first material layer, facilitating lithium ion transport and intercalation, and helping to ensure that the entire negative electrode active material layer provides a high capacity for the secondary battery. This allows the secondary battery to have high energy density while the secondary battery has good kinetic performance and cycling performance.

In some embodiments of this application, the thickness $T_{21}$ of the first material layer and the thickness $T_{22}$ of the second material layer satisfy: $1\leq T_{21}/T_{22}\leq10$. For example, a value of $T_{21}/T_{22}$ may be 1, 2, 3, 4, 5, 6, 7, 8, 9, 10, or any value within a range defined by any two of these values. Controlling the thickness ratio of the first material layer to the second material layer within the above range facilitates cooperation between the first material layer including no silicon element and the second material layer including the silicon element and allows the second material layer to have more pores than the first material layer, facilitating lithium ion transport and intercalation, and helping to ensure that the entire negative electrode active material layer provides a high capacity for the secondary battery. This ensures that the secondary battery has high energy density while having good kinetic performance and cycling performance.

This application does not impose particular restrictions on the electrolyte, as long as the purpose of this application can be achieved. For example, the electrolyte includes a lithium salt and a non-aqueous solvent. In some embodiments of this application, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, $LiBOB$, or lithium difluoroborate. For example, the lithium salt may be $LiPF_6$, as it can provide high ionic conductivity and improve cycling characteristics. The non-aqueous solvent may be at least one of a carbonate compound, a carboxylate compound, an ether compound, or another organic solvent. The carbonate compound may be at least one of a chain carbonate compound, a cyclic carbonate compound, or a fluorinated carbonate compound. The chain carbonate compound may include, but is not limited to, at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate compound may include, but is not limited to, at least one of ethylene carbonate (EC), propylene carbonate (PC), butylene carbonate (BC), or vinyl ethylene carbonate (VEC). The fluorinated carbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decalactone, valerolactone, mevalonolactone, or caprolactone. The ether compound may include, but is not limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The another organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester.

This application does not impose particular restrictions on the negative electrode current collector, as long as the purpose of this application can be achieved. For example, the negative electrode current collector may include copper foil, copper alloy foil, nickel foil, stainless steel foil, titanium foil, nickel foam, copper foam, or the like. In this application, the thickness of the negative electrode current collector is not particularly limited, as long as the purpose of this application can be achieved. For example, the thickness of the negative electrode current collector is 6 μm to 10 μm. Optionally, the negative electrode active material layer may further include at least one of a negative electrode conductive agent, a dispersant, or a negative electrode binder. This application does not impose particular restrictions on a mass ratio of components in the second material layer, as long as the purpose of this application can be achieved. For example, the mass ratio of the second negative electrode active material, the polyurethane binder, the negative electrode conductive agent, a stabilizer, and the negative electrode binder in the second material layer is (90~98):(0.5~10):(0~1.5):(0~1.5):(0~1.9). This application does not impose particular restrictions on the mass ratio of components in the first material layer, as long as the purpose of this application can be achieved. For example, the mass ratio of the first negative electrode active material, the negative electrode conductive agent, a stabilizer, and the negative electrode binder in the first material layer is (95.5~98.5):(0~1.5):(0~1.5):(0~1.9). This application does not impose particular restrictions on the types of the negative electrode conductive agent, stabilizer, and negative electrode binder, as long as the purpose of this application can be achieved.

In some embodiments of this application, the secondary battery includes a positive electrode plate. This application does not impose particular restrictions on the positive electrode plate, as long as the purpose of this application can be achieved. In one embodiment, the positive electrode plate includes a positive electrode current collector and a positive electrode active material layer. The positive electrode active material layer is disposed on one or two surfaces of the positive electrode current collector, where the "surface" may be a partial surface or the entire surface of the positive electrode current collector. This application does not impose particular restrictions on the positive electrode current collector, as long as the purpose of this application can be achieved. For example, the positive electrode current collector may include aluminum foil, aluminum alloy foil, or the like. The positive electrode active material layer of this application includes a positive electrode active material. This application does not impose particular restrictions on the type of the positive electrode active material, as long as the purpose of this application can be achieved. For example, the positive electrode active material may include at least one of lithium nickel cobalt manganese oxide, lithium nickel cobalt aluminum oxide, lithium iron phosphate, lithium-rich manganese-based material, lithium cobalt oxide, lithium manganese oxide, lithium manganese iron phosphate, lithium titanate, or the like. In this application, the positive electrode active material may further include a non-metallic element. The non-metallic element includes at least one of fluorine, phosphorus, boron, chlorine, silicon, or sulfur, and these metal elements can further improve the stability of the positive electrode active material. In this application, the thicknesses of the positive electrode current collector and the positive electrode active material layer are not particularly limited, as long as the purpose of this application can be achieved. For example, the thickness of the positive electrode current collector is 5 μm to 20 μm. The thickness of a single positive electrode active material layer is 30 μm to 120 μm. Optionally, the positive electrode active material layer may further include at least one of a positive electrode conductive agent or a positive electrode binder. This application does not impose particular restrictions on the types of the positive electrode conductive agent and positive electrode binder in the positive electrode active material layer, as long as the purpose of this application can be achieved. A mass ratio of the positive electrode active material, the positive electrode conductive agent, and the positive electrode binder in the positive electrode active material layer is not particularly limited in this application, and may be selected by those skilled in the art according to actual needs, as long as the purpose of this application can be achieved. For example, the mass ratio of the positive electrode active material, the positive electrode conductive agent, and the positive electrode binder in the positive electrode active material layer is (94~97.9):(0.8~3.0):(1.0~3.0).

In some embodiments of this application, the secondary battery further includes a separator, where the separator is configured to separate the positive electrode plate from the negative electrode plate, to prevent internal short circuits in the secondary battery and allow electrolyte ions to freely pass through, without affecting an electrochemical charging and discharging process. This application does not impose particular restrictions on the separator, as long as the purpose of this application can be achieved. For example, a material of the separator may include, but is not limited to, at least one of polyolefin (PO) mainly including polyethylene (PE) or polypropylene (PP), polyester (for example, polyethylene terephthalate (PET) film), cellulose, polyimide (PI), polyamide (PA), spandex, or aramid. A type of separator may include at least one of a woven film, a non-woven film, a microporous film, a composite film, a rolled film, or a spun film. This application does not impose particular restrictions on the thickness of the separator, as long as the purpose of this application can be achieved.

In some embodiments of this application, the secondary battery further includes an outer package, where the outer package is configured to accommodate the positive electrode plate, the negative electrode plate, the separator, and the electrolyte. The type and shape of the outer package are not particularly limited in this application, and may be selected by those skilled in the art according to actual needs, as long as the purpose of this application can be achieved.

This application does not impose particular restrictions on a preparation method of the negative electrode plate, as long as the purpose of this application can be achieved. For example, in some embodiments, the preparation method of the negative electrode plate includes, but is not limited to, the following steps: (1) a first negative electrode slurry and a second negative electrode slurry are prepared, and the first negative electrode slurry and the second negative electrode slurry are sprayed onto two surfaces of the negative electrode current collector using a double-layer coating machine, and dried in a drying oven to obtain a semi-finished negative electrode plate having both surface coated with a negative electrode active material layer; and (2) after the semi-finished negative electrode plate obtained in step (1) is cold-pressed, a groove is prepared on a surface of the negative electrode active material layer by laser etching, followed by slitting and tab welding to obtain a negative electrode plate. This application does not impose particular restrictions on solid contents of the first negative electrode slurry and the second negative electrode slurry in step (1), as long as the purpose of this application can be achieved. This application does not impose particular restrictions on drying process parameters in step (1), as long as the purpose of this application can be achieved. This application does not impose particular restrictions on cold pressing process parameters in step (2), as long as the purpose of this application can be achieved.

The secondary battery of this application is not particularly limited and may include any apparatus in which an electrochemical reaction takes place. For example, the secondary battery may include, but is not limited to, a lithium metal secondary battery, a lithium-ion secondary battery (lithium-ion battery), a lithium polymer secondary battery, or a lithium-ion polymer secondary battery.

This application does not impose particular restrictions on a preparation method of the secondary battery, and well-known preparation methods in the art can be used, as long as the purpose of this application can be achieved. For example, the preparation method of the secondary battery includes, but is not limited to, the following steps: a separator, a positive electrode plate, a separator, and a negative electrode plate are stacked in sequence, a resulting stack is subjected to operations such as winding or folding as needed to obtain an electrode assembly of a wound structure, the electrode assembly is placed in a packaging bag, an electrolyte is injected into the packaging bag, and the packaging bag is sealed to obtain a secondary battery; alternatively, a separator, a positive electrode plate, a separator, and a negative electrode plate are stacked in sequence, then four corners of the entire stacked structure are fixed to obtain an electrode assembly of a stacked structure, the electrode assembly is placed in a packaging bag, an electrolyte is injected into the packaging bag, and the packaging bag is sealed to obtain a secondary battery.

A second aspect of this application provides an electronic apparatus, including the secondary battery described in any of the foregoing embodiments. Therefore, the electronic apparatus has good use performance.

The electronic apparatus of this application is not particularly limited and may be any electronic apparatus known in the prior art. For example, the electronic apparatus may include, but is not limited to, a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic organizer, a calculator, a memory card, a portable recorder, a radio, a backup power supply, a motor, an automobile, a motorcycle, a power-assisted bicycle, a bicycle, a lighting device, a toy, a gaming console, a clock, an electric tool, a flashlight, a camera, a large household storage battery, or a lithium-ion capacitor.

Examples

The examples and comparative examples are provided below to more specifically illustrate the implementation of this application. Various tests and evaluations were conducted according to the methods described below.

Test methods and devices:

Viscosity test of electrolyte:

(1) Electrolyte centrifugation: After a lithium-ion battery was discharged at a constant current of 0.05C to a discharge cut-off voltage of 3.0 V at 25°C, a packaging bag of the lithium-ion battery was opened by cutting, an electrolyte was removed, a negative electrode plate was placed in a centrifuge tube, and centrifugation was performed to remove excess electrolyte. (2) Viscosity test: A rotational viscometer method was used for testing, where the brand of a rotational viscometer was Brookfield, the model was DV1MLV, the rotor (model: #00) was provided with a ULA (Ubbelohde viscometer, Ubbelohde) low-viscosity sample cup, with a range of 20 CP and a rotating speed at a torque ranging from 1% to 100%, to heat an electrolyte sample to 25°C, the electrolyte was poured into the sample cup of the rotational viscometer, and a viscosity of the electrolyte was calculated according to the formula: $\eta=AM/n1$, where $\eta$ is a dynamic viscosity of the liquid, measured in Pa·s; A is a constant, measured in $/m^3$; M is a viscous torque of the fluid acting on a cylinder, measured in N·m; and n1 is a rotating speed of the cylinder, measured in rad/s.

Sampling of negative electrode plate:

At 25°C, the lithium-ion battery was discharged at a constant current of 0.05C to a discharge cut-off voltage, the lithium-ion battery was disassembled in an argon atmosphere, and the negative electrode plate was soaked in a dimethyl carbonate solvent for 2 h, followed by drying at 60°C for 3 h to obtain a negative electrode plate. In the examples and comparative examples of this application, the discharge cut-off voltage of the lithium-ion battery was 3.0 V, and a charge cut-off voltage was 4.45 V. It can be understood that when a voltage range marked on an outer package of a delivered battery was 3.0 V to 4.45 V, the charge cut-off voltage was 4.45 V, and the discharge cut-off voltage was 3.0 V.
Unless otherwise specified, the following test methods were used to test the negative electrode plate obtained in the above manner.

Mass percentage test of silicon element:

After the negative electrode plate was subjected to ion polishing to obtain a cross section, a boundary line between a first material layer and a second material layer was determined using a scanning electron microscope (SEM), and a percentage of the silicon element in the second material layer was tested using energy-dispersive X-ray spectroscopy, where the mass percentage of the silicon element was obtained based on a mass of the second material layer.

Percentage test of polyurethane binder:

A percentage of the polyurethane binder in the second material layer was measured using a thermogravimetric analysis method.
Specific steps were as follows: (1) sample preparation: about 10 mg of powder of the second material layer was gently scraped off with a blade; (2) instrument setup: a thermogravimetric analyzer was selected, with an atmosphere set to $N_2$, a temperature range set to 50°C to 650°C, and a heating rate set to 10°C/min; (3) experimental steps: the sample was placed in a sample pan of the thermogravimetric analyzer, the thermogravimetric analyzer was started, and mass changes of the sample were recorded during heating; (4) data analysis: a thermogravimetric (TG) curve was analyzed, where weight loss peaks at 213°C to 243°C and 425°C to 480°C (including 425°C) were thermal decomposition characteristic peaks of polyurethane; and mass loss of the sample during heating was obtained based on weight changes in the TG curve, which was the mass percentage of the polyurethane binder in the second material layer.

Cross-sectional area, depth, and spacing test of grooves:

Parameters of grooves on the negative electrode plate were detected using a scanning electron microscope (ZEISS SEM (sigma-02-33)). A spacing between grooves could be determined based on a surface morphology of the negative electrode plate. Parameters including an upper width, a lower width, and a depth of the grooves were measured with a microscope by preparing a cross section of the negative electrode plate using ion beam cross-section polishing (CP). The depth was equal to a depth value at the center between an upper groove position and a lower groove position. 32 points were tested to calculate an average value to obtain the width and depth, and then an area was calculated.

Molecular weight test of polyurethane binder:

(1) Sample preparation: the second material layer was scraped from a surface of the negative electrode plate, the obtained second material layer was placed in N-methylpyrrolidone (NMP) for 2 h, and then the solution was filtered to remove insoluble impurities, to obtain a polyurethane binder as a sample.
(2) Instrument preparation: an appropriate gel column was selected based on a molecular weight range of the binder, and a mobile phase (for example, tetrahydrofuran THF or NMP) was set, where the use of the THF was sufficient for testing the molecular weight of the binder in this application, with a flow rate of 0.5 mL/min. The gel column in this application was a medium-hole-diameter column.

(3) Experimental operation: the sample was injected into a high-temperature gel permeation chromatograph (GPC), and a relationship between an elution time and a detector signal was recorded.

(4) Data processing: a polystyrene standard sample was used for calibration to establish a relationship between the molecular weight and the elution time, and the molecular weight and molecular weight distribution of the sample (for example, a number-average molecular weight Mn, a weight-average molecular weight Mw, and polydispersity index PDI) were calculated based on a calibration curve. This application focuses on the weight-average molecular weight Mw.

Average particle size test of silicon-containing material:

A SEM image (Si and graphite were distinguished under a backscattering condition) of the second material layer was exported in a common image format (for example, JPEG), and the image was processed and analyzed using image analysis software (for example, ImageJ), where an image magnification was 5000X, and the number of tested particles was greater than or equal to 32. Scale calibration: in the image analysis software, a scale of the image was calibrated based on the magnification of the SEM. For example, if the SEM magnification was 10000 times and 100 pixels in the image corresponded to 1 micron, a size per pixel was 0.01 micron. The particles in the image were marked manually or automatically. A diameter or equivalent diameter of each particle was measured, size data of all particles was recorded, and an average particle size was calculated.

Thickness test of first material layer, second material layer, and negative electrode active material layer: A total thickness of the active layers was measured using a microscope method.

Principle: A cross section of the negative electrode plate was observed using a scanning electron microscope (SEM), and the thicknesses of the first material layer, second material layer, and negative electrode active material layer were directly measured.

Specific steps were as follows: (1) sample preparation: a negative electrode plate was cut into a sheet along its thickness direction and length direction to obtain a clear cross section; (2) observation: the SEM was used to observe the cross section to respectively find out boundaries of the first material layer, second material layer, and negative electrode active material layer; and (3) measurement: a measurement function of the SEM was used to directly measure the thicknesses of the first material layer, second material layer, and negative electrode active material layer, respectively.

Kinetic performance test:

(1) Interface lithium precipitation test:

The lithium-ion battery was placed in a 0°C thermostat, and left standing for 60 min to reach a constant temperature; and the lithium-ion battery reaching the constant temperature was charged at 0°C at a constant current of 1C to 4.45 V, then charged at a constant voltage of 4.45 V until the current reached 0.025C, left standing for 5 min, and then discharged at a constant current of 1C to 3.0 V. This was one charge-discharge cycle. After 10 charge-discharge cycles, the battery was charged again at a constant current of 1C to 4.45 V, and then charged at a constant voltage of 4.45 V until the current reached 0.025C to obtain a fully charged battery which had experienced 10 cycles. The battery was disassembled in a drying room with a humidity less than 5%, and a state of the negative electrode plate was photographically recorded.

A lithium precipitation degree in the lithium-ion battery was determined based on the following criteria.

No lithium precipitation: A lithium deposition area on the surface of the negative electrode plate was less than 0.5%.

Slight lithium precipitation: A lithium deposition area on the surface of the negative electrode plate was less than 10%.

Moderate lithium precipitation: A lithium deposition area on the surface of the negative electrode plate was 10% to 30%;

Severe lithium precipitation: A lithium deposition area on the surface of the negative electrode plate was greater than 30%.

(2) Severity of purple spot and lithium precipitation at interface after 500 cycles: The lithium-ion battery which had experienced 500 cycles using the charge-discharge cycle method in "Interface lithium precipitation test" was charged at 25°C at a constant current of 0.7C to a voltage of 4.45 V, then charged at a constant voltage of 4.45 V until the current reached 0.05C, and disassembled to observe the negative electrode plate through comparison; a lithium precipitation situation at a cycling interface was observed and described; and the interface condition was graded as follows: through visual observation of an operator, if a purple spot area accounted for less than or equal to 5% of a total surface area of the negative electrode active material layer, it was defined that there was no purple spot; if the purple spot area accounted for greater than 5% and less than or equal to 10% of the total surface area of the negative electrode active material layer, it was defined that there were slight purple spots; if the purple spot area accounted for greater than 10% and less than or equal to 25% of the total surface area of the negative electrode active material layer, it was defined that there were moderate purple spots; and if the purple spot area accounted for greater than 25% of the total surface area of the negative electrode active material layer, it was defined that there were severe purple spots.

Test of capacity retention rate after 500 cycles:

At 25°C, the battery was charged at a constant current of 0.7C to a voltage of 4.45 V, then charged at a constant voltage of 4.45 V until the current reached 0.05C, and then discharged at a constant current of 1C to a voltage of 3.0 V. This was one charge-discharge cycle process. After the above charge-discharge cycle was repeated 500 times, a capacity retention rate was tested.

Capacity retention rate after 500 cycles (%)=Discharge capacity after the 500th cycle/Discharge capacity after the first cycle $\times$ 100%.

Example 1-1

<Preparation of electrolyte>

In a dry argon atmosphere, EC and DMC were mixed at a mass ratio of 1:1 to obtain a solvent, and then a lithium salt $LiPF_6$ was mixed with the solvent at a mass ratio of 13.75:86.25 to prepare an electrolyte with a lithium salt concentration of 1.1 mol/L.

<Preparation of negative electrode plate>

A first negative electrode active material artificial graphite, a stabilizer carboxymethyl cellulose sodium (CMC-Na), and a negative electrode binder styrene-acrylic emulsion were mixed at a mass ratio of 98:0.5:1.5; then deionized water was added as a solvent; and the resulting mixture was stirred under the action of a vacuum mixer to obtain a first negative electrode slurry with a solid content of 50wt% and a uniform system.
A second negative electrode active material including artificial graphite and a silicon-carbon compound (chemical formula: SiC), a negative electrode conductive agent carbon nanotubes, a stabilizer carboxymethyl cellulose sodium (CMC-Na), and a polyurethane binder polyurethane (with a molecular weight of 10000) were mixed at a mass ratio of 51.4:42.1:0.5:1:5; then deionized water was added as a solvent; and the resulting mixture was stirred under the action of a vacuum mixer to obtain a second negative electrode slurry with a solid content of 50wt% and a uniform system.
The first negative electrode slurry and the second negative electrode slurry were sprayed onto two surfaces of the negative electrode current collector using a double-layer coating machine, and dried in a drying oven to obtain a semi-finished negative electrode plate having both surfaces coated with a negative electrode active material layer; the semi-finished negative electrode plate was cold-pressed; a groove was etched on a surface of the negative electrode active material layer using a laser processing technology; then, after slitting, a tab welding region was cleaned; and a tab (copper tab) was welded to obtain a negative electrode plate with specifications of 76 mm $\times$ 856 mm for later use. A depth H, a spacing $\sigma$, and an area S of the groove are shown in Table 1. A thickness y of the negative electrode active material layer was equal to 60 $\mu$m, and a thickness ratio of the first material layer to the second material layer was 5:1.

<Preparation of positive electrode plate>

A positive electrode active material lithium iron phosphate, a positive electrode conductive agent acetylene black, and a positive electrode binder polyvinylidene fluoride (PVDF, with a weight-average molecular weight of $5 \times 10^5$) were mixed at a mass ratio of 94:3:3; N-methylpyrrolidone (NMP) was added as a solvent; and the resulting mixture was stirred under the action of a vacuum mixer to obtain a positive electrode slurry with a solid content of 75wt% and a uniform system. The positive electrode slurry was uniformly applied onto one surface of a positive electrode current collector aluminum foil with a thickness of 6 $\mu$m; and the positive electrode current collector aluminum foil was dried at 90°C to obtain a positive electrode plate having one surface coated with a positive electrode active material layer (with a thickness of 80 $\mu$m). Then, the above steps were repeated on the other surface of the aluminum foil to obtain a positive electrode plate having both surfaces coated with the positive electrode active material layer, followed by cold pressing, slitting, and tab (aluminum tab) welding to obtain a positive electrode plate with specifications of 74 mm $\times$ 851 mm for later use.

<Preparation of separator>

A polypropylene (PP) porous film with a thickness of 9 μm was used as the separator.

<Preparation of lithium-ion battery>

The prepared separator, positive electrode plate, separator, and negative electrode plate were stacked in sequence, and wound to obtain an electrode assembly. The electrode assembly was placed in an aluminum-plastic film packaging bag and dried, and then the electrolyte was injected, followed by processes such as vacuum sealing, standing, formation, degassing, and trimming to obtain a lithium-ion battery.

Examples 1-2 to 1-9

Examples 1-2 to 1-9 were the same as Example 1-1 except that the relevant preparation parameters were adjusted according to Table 1.

A change in the mass percentage $W_1\%$ of the silicon element was implemented by adjusting a mass percentage of the silicon-carbon compound in the second material layer. When the mass percentage of the silicon-carbon compound changed, the mass percentage of artificial graphite changed accordingly, and a sum of the mass percentages of the silicon-carbon compound and artificial graphite remained unchanged.

Example 1-10

Example 1-10 was the same as Example 1-1 except that the electrolyte was prepared according to the following steps.

<Preparation of electrolyte>

In a dry argon atmosphere, EC and DMC were mixed at a mass ratio of 1:2 to obtain a solvent, and then a lithium salt $LiPF_6$ was mixed with the solvent at a mass ratio of 13.75:86.25 to prepare an electrolyte with a lithium salt concentration of 1.1 mol/L.

Example 1-11

Example 1-11 was the same as Example 1-1 except that the electrolyte was prepared according to the following steps.

<Preparation of electrolyte>

In a dry argon atmosphere, EC and DMC were mixed at a mass ratio of 3:1 to obtain a solvent, and then a lithium salt $LiPF_6$ was mixed with the solvent at a mass ratio of 13.75:86.25 to prepare an electrolyte with a lithium salt concentration of 1.1 mol/L.

Examples 1-12 to 1-20

Examples 1-12 to 1-20 were the same as Example 1-1 except that the relevant preparation parameters were adjusted according to Table 1.

A change in the mass percentage $W_1\%$ of the silicon element was implemented by adjusting the mass percentage of the silicon-carbon compound in the second material layer. When the mass percentage of the silicon-carbon compound changed, the mass percentage of artificial graphite changed accordingly, and a sum of the mass percentages of the silicon-carbon compound and artificial graphite remained unchanged.

When the mass percentage $W_2\%$ of the polyurethane binder changed, the mass percentage of artificial graphite changed accordingly, and the mass percentages of the silicon-carbon compound, negative electrode conductive agent, and stabilizer remained unchanged.

Examples 1-21 to 1-38

Examples 1-21 to 1-38 were the same as Example 1-1 except that the relevant preparation parameters were adjusted according to Table 1.

Examples 2-1 to 2-4

Examples 2-1 to 2-4 were the same as Example 1-1 except that the relevant preparation parameters were adjusted according to Table 2.

Examples 3-1 to 3-6

Examples 3-1 to 3-6 were the same as Example 1-1 except that the relevant preparation parameters were adjusted according to Table 3.

In Example 3-2, when the type of silicon-containing material changed, the percentage $W_1\%$ of the silicon element was kept unchanged by adjusting the mass percentages of the silicon-containing material and artificial graphite.

Comparative Example 1

Comparative Example 1 was the same as Example 1-1 except that the negative electrode plate was prepared according to the following steps.

<Preparation of negative electrode plate>

A negative electrode active material artificial graphite, a stabilizer carboxymethyl cellulose sodium (CMC-Na), and a negative electrode binder styrene-acrylic emulsion were mixed at a mass ratio of 98:0.5:1.5; then deionized water was added as a solvent; and the resulting mixture was stirred under the action of a vacuum mixer to obtain a first negative electrode slurry with a solid content of 50wt% and a uniform system.

The first negative electrode slurry was applied onto one surface of a negative electrode current collector copper foil with a thickness of 8 $\mu$m, and the negative electrode current collector copper foil was dried at 85°C to form a first material layer, thereby obtaining a negative electrode plate having one surface coated with a negative electrode active material layer. Then, the above steps were repeated on the other surface of the copper foil to obtain a negative electrode plate having both surfaces coated with the negative electrode active material layer. The negative electrode plate was cold-pressed; a groove was etched on a surface of the negative electrode active material layer using a laser processing technology; then, after slitting, a tab welding region was cleaned; and a tab (copper tab) was welded to obtain a negative electrode plate with specifications of 76 mm × 856 mm for later use. A depth H, a spacing σ, and an area S of the groove are shown in Table 1. A thickness of the first material layer, that was, a thickness y of the negative electrode active material layer, was equal to 60 $\mu$m.

Comparative Example 2

Comparative Example 2 was the same as Example 1-1 except that the relevant preparation parameters were adjusted according to Table 1.

A change in the mass percentage $W_1\%$ of the silicon element was implemented by adjusting the mass percentage of the silicon-carbon compound in the second material layer. When the mass percentage of the silicon-carbon compound changed, the mass percentage of artificial graphite changed accordingly, and a sum of the mass percentages of the silicon-carbon compound and artificial graphite remained unchanged.

Comparative Example 3

Comparative Example 3 was the same as Example 1-1 except that the electrolyte was prepared according to the following steps.

<Preparation of electrolyte>

In a dry argon atmosphere, EC and DMC were mixed at a mass ratio of 1:2.5 to obtain a solvent, and then a lithium salt $LiPF_6$ was mixed with the solvent at a mass ratio of 13.75:86.25 to prepare an electrolyte with a lithium salt concentration of 1.1 mol/L.

Comparative Example 4

Comparative Example 4 was the same as Example 1-1 except that the electrolyte was prepared according to the following steps.

<Preparation of electrolyte>

In a dry argon atmosphere, EC and DMC were mixed at a mass ratio of 3.5:1 to obtain a solvent, and then a lithium salt $LiPF_6$ was mixed with the solvent at a mass ratio of 13.75:86.25 to prepare an electrolyte with a lithium salt concentration of 1.1 mol/L.

Comparative Examples 5 and 6

Comparative Examples 5 and 6 were the same as Example 1-1 except that the relevant preparation parameters were adjusted according to Table 1.

When the mass percentage $W_2\%$ of the polyurethane binder changed, the mass percentage of artificial graphite changed accordingly, and the mass percentages of the silicon-carbon compound, negative electrode conductive agent, and stabilizer remained unchanged.

Comparative Example 7

Comparative Example 7 was the same as Comparative Example 3 except that the relevant preparation parameters were adjusted according to Table 1.

When the mass percentage $W_2\%$ of the polyurethane binder changed, the mass percentages of the negative electrode conductive agent and stabilizer changed proportionally, a sum of the mass percentages of the negative electrode conductive agent and stabilizer remained unchanged, and the mass percentage of the negative electrode active material remained unchanged.

Comparative Example 8

Comparative Example 8 was the same as Comparative Example 4 except that the relevant preparation parameters were adjusted according to Table 1.

When the mass percentage $W_2\%$ of the polyurethane binder changed, the mass percentage of artificial graphite changed accordingly, and the mass percentages of the silicon-carbon compound, negative electrode conductive agent, and stabilizer remained unchanged.

Comparative Example 9

Comparative Example 9 was the same as Example 1-1 except that no groove was provided in the <Preparation of negative electrode plate>.

Comparative Example 10

Comparative Example 10 was the same as Example 1-1 except that the polyurethane binder was replaced with polyacrylic acid in the <Preparation of negative electrode plate>.

Comparative Examples 11 to 14

Comparative Examples 11 to 14 were the same as Example 1-1 except that the relevant preparation parameters were adjusted according to Table 1.

The preparation parameters and performance data of the examples and comparative examples are shown in Tables 1 to 3.

**Table 1**

| | $W_1$ (%) | $K_1$ | $S=K_1+20W_1$ ($\mu m^2$) | P (MPa·s) | $W_2$ (%) | $K_2$ | $H=K_2W_2P/S$ ($\mu m$) | $\sigma$ ($\mu m$) | y ($\mu m$) | $S/(\sigma-y)\times100\%$ | Whether $1.4\%\leq S/(\sigma y)\times100\%\leq1.6\%$ is satisfied | $T_{11}$ ($\mu m$) | $T_{12}$ ($\mu m$) | $T_{11}/T_{12}$ | Interface lithium precipitation | Interface purple spot severity | Capacity retention rate |
|---|---|---|---|---|---|---|---|---|---|---|---|---|---|---|---|---|---|
| Example 1-1 | 20 | 600 | 1000 | 5.0 | 5.0 | 1000 | 25.0 | 1111 | 60 | 1.50% | Yes | 50 | 10 | 5 | None | None | 92% |
| Example 1-2 | 1 | 600 | 620 | 5.0 | 5.0 | 1000 | 40.3 | 689 | 60 | 1.50% | Yes | 50 | 10 | 5 | Moderate | None | 75% |
| Example 1-3 | 15 | 600 | 900 | 5.0 | 5.0 | 1000 | 27.8 | 1000 | 60 | 1.50% | Yes | 50 | 10 | 5 | None | None | 88% |
| Example 1-4 | 30 | 600 | 1200 | 5.0 | 5.0 | 1000 | 20.8 | 1333 | 60 | 1.50% | Yes | 50 | 10 | 5 | None | None | 88% |
| Example 1-5 | 50 | 600 | 1600 | 5.0 | 5.0 | 1000 | 15.6 | 1778 | 60 | 1.50% | Yes | 50 | 10 | 5 | None | Slight | 75% |
| Example 1-6 | 1 | 600 | 620 | 5.0 | 5.0 | 1000 | 40.3 | 1111 | 60 | 0.93% | No | 50 | 10 | 5 | Moderate | Moderate | 70% |
| Example 1-7 | 15 | 600 | 900 | 5.0 | 5.0 | 1000 | 27.8 | 1111 | 60 | 1.35% | No | 50 | 10 | 5 | None | Slight | 83% |
| Example 1-8 | 30 | 600 | 1200 | 5.0 | 5.0 | 1000 | 20.8 | 1111 | 60 | 1.80% | No | 50 | 10 | 5 | Slight | None | 83% |
| Example 1-9 | 50 | 600 | 1600 | 5.0 | 5.0 | 1000 | 15.6 | 1111 | 60 | 2.40% | No | 50 | 10 | 5 | Moderate | Slight | 70% |
| Example 1-10 | 20 | 600 | 1000 | 2.0 | 5.0 | 1000 | 10.0 | 1111 | 60 | 1.50% | Yes | 50 | 10 | 5 | None | Slight | 85% |
| Example 1-11 | 20 | 600 | 1000 | 8.0 | 5.0 | 1000 | 40.0 | 1111 | 60 | 1.50% | Yes | 50 | 10 | 5 | Slight | Slight | 83% |
| Example 1-12 | 20 | 600 | 1000 | 5.0 | 1.0 | 1000 | 5.0 | 1111 | 60 | 1.50% | Yes | 50 | 10 | 5 | None | None | 80% |
| Example 1-13 | 20 | 600 | 1000 | 5.0 | 2.0 | 1000 | 10.0 | 1111 | 60 | 1.50% | Yes | 50 | 10 | 5 | None | None | 85% |
| Example 1-14 | 20 | 600 | 1000 | 5.0 | 8.0 | 1000 | 40.0 | 1111 | 60 | 1.50% | Yes | 50 | 10 | 5 | Slight | None | 85% |
| Example 1-15 | 20 | 600 | 1000 | 5.0 | 10.0 | 1000 | 50.0 | 1111 | 60 | 1.50% | Yes | 50 | 10 | 5 | Moderate | Slight | 80% |
| Example 1-16 | 1 | 600 | 620 | 5.0 | 5.0 | 1000 | 40.3 | 350 | 118 | 1.50% | Yes | 95 | 23 | 4.1 | Moderate | Slight | 70% |
| Example 1-17 | 1 | 600 | 620 | 5.0 | 5.0 | 1000 | 40.3 | 420 | 98 | 1.50% | Yes | 82 | 16 | 5.1 | Moderate | Slight | 73% |

17

EP 4 734 165 A2

| | $W_1$ (%) | $K_1$ | $S=K_1+20W_1$ ($\mu m^2$) | P (MPa·s) | $W_2$ (%) | $K_2$ | $H=K_2W_2P$ /S ($\mu m$) | $\sigma$ ($\mu m$) | y ($\mu m$) | $S/(\sigma-y)\times$ 100% | Whether 1.4%≤S/ ($\sigma y$) ×100%≤1.6 % is satisfied | $T_{11}$ ($\mu m$) | $T_{12}$ ($\mu m$) | $T_{11}/T_{12}$ | Interface lithium precipitation | Interface purple spot severity | Capacity retention rate |
|---|---|---|---|---|---|---|---|---|---|---|---|---|---|---|---|---|---|
| Example 1-18 | 15 | 600 | 900 | 5.0 | 5.0 | 1000 | 27.8 | 600 | 100 | 1.50% | Yes | 83 | 17 | 4.9 | None | Slight | 83% |
| Example 1-19 | 50 | 600 | 1600 | 5.0 | 5.0 | 1000 | 15.6 | 3400 | 31 | 1.50% | Yes | 26 | 5 | 5.2 | Moderate | Slight | 73% |
| Example 1-20 | 50 | 600 | 1600 | 5.0 | 5.0 | 1000 | 15.6 | 3500 | 30 | 1.50% | Yes | 25 | 5 | 5 | Moderate | Moderate | 69% |
| Example 1-21 | 20 | 600 | 1000 | 5.0 | 5.0 | 1000 | 25.0 | 2222 | 30 | 1.50% | Yes | 25 | 5 | 5 | None | None | 90% |
| Example 1-22 | 20 | 600 | 1000 | 5.0 | 5.0 | 1000 | 25.0 | 585 | 114 | 1.50% | Yes | 95 | 19 | 5 | Slight | None | 85% |
| Example 1-23 | 20 | 600 | 1000 | 5.0 | 5.0 | 1000 | 25.0 | 2525 | 26.4 | 1.50% | Yes | 22 | 4.4 | 5 | Slight | None | 85% |
| Example 1-24 | 20 | 600 | 1000 | 5.0 | 5.0 | 1000 | 25.0 | 529 | 126 | 1.50% | Yes | 105 | 21 | 5 | Moderate | None | 75% |
| Example 1-25 | 20 | 600 | 1000 | 5.0 | 5.0 | 1000 | 25.0 | 1212 | 55 | 1.50% | Yes | 50 | 5 | 10 | Slight | None | 88% |
| Example 1-26 | 20 | 600 | 1000 | 5.0 | 5.0 | 1000 | 25.0 | 667 | 100 | 1.50% | Yes | 50 | 50 | 1 | None | None | 90% |
| Example 1-27 | 20 | 600 | 1000 | 5.0 | 5.0 | 1000 | 25.0 | 2469 | 27 | 1.50% | Yes | 25 | 2 | 125 | Moderate | None | 70% |
| Example 1-28 | 20 | 600 | 1000 | 5.0 | 5.0 | 1000 | 25.0 | 741 | 90 | 1.50% | Yes | 30 | 60 | 0.5 | Moderate | None | 75% |
| Example 1-29 | 20 | 400 | 800 | 5.0 | 5.0 | 1000 | 31.3 | 889 | 60 | 1.50% | Yes | 50 | 10 | 5 | None | None | 88% |
| Example 1-30 | 20 | 500 | 900 | 5.0 | 5.0 | 1000 | 27.8 | 1000 | 60 | 1.50% | Yes | 50 | 10 | 5 | None | None | 90% |

EP 4 734 165 A2

| | $W_1$ (%) | $K_1$ | $S=K_1+20W_1$ ($\mu m^2$) | P (MPa·s) | $W_2$ (%) | $K_2$ | $H=K_2W_2P/S$ ($\mu m$) | $\sigma$ ($\mu m$) | y ($\mu m$) | $S/(\sigma-y)\times100\%$ | Whether $1.4\%\leq S/(\sigma y)\times100\%\leq1.6\%$ is satisfied | $T_{11}$ ($\mu m$) | $T_{12}$ ($\mu m$) | $T_{11}/T_{12}$ | Interface lithium precipitation | Interface purple spot severity | Capacity retention rate |
|---|---|---|---|---|---|---|---|---|---|---|---|---|---|---|---|---|---|
| Example 1-31 | 20 | 700 | 1100 | 5.0 | 5.0 | 1000 | 22.7 | 1222 | 60 | 1.50% | Yes | 50 | 10 | 5 | None | None | 89% |
| Example 1-32 | 20 | 800 | 1200 | 5.0 | 5.0 | 1000 | 20.8 | 1333 | 60 | 1.50% | Yes | 50 | 10 | 5 | None | None | 87% |
| Example 1-33 | 20 | 600 | 1000 | 5.0 | 5.0 | 800 | 20.0 | 1111 | 60 | 1.50% | Yes | 50 | 10 | 5 | None | Slight | 85% |
| Example 1-34 | 20 | 600 | 1000 | 5.0 | 5.0 | 900 | 22.5 | 1111 | 60 | 1.50% | Yes | 50 | 10 | 5 | None | None | 88% |
| Example 1-35 | 20 | 600 | 1000 | 5.0 | 5.0 | 1100 | 27.5 | 1111 | 60 | 1.50% | Yes | 50 | 10 | 5 | None | None | 89% |
| Example 1-36 | 20 | 600 | 1000 | 5.0 | 5.0 | 1200 | 30.0 | 1111 | 60 | 1.50% | Yes | 50 | 10 | 5 | None | Slight | 85% |
| Example 1-37 | 20 | 600 | 1000 | 5.0 | 5.0 | 1000 | 25.0 | 1190 | 60 | 1.40% | Yes | 50 | 10 | 5 | None | Slight | 83% |
| Example 1-38 | 20 | 600 | 1000 | 5.0 | 5.0 | 1000 | 25.0 | 1042 | 60 | 1.60% | Yes | 50 | 10 | 5 | Slight | None | 83% |
| Comparative Example 1 | 0 | 600 | 600 | 5.0 | 5.0 | 1000 | 41.7 | 1111 | 60 | 0.90% | No | 60 | \ | \ | Moderate | Moderate | 60% |
| Comparative Example 2 | 55 | 600 | 1700 | 5.0 | 5.0 | 1000 | 14.7 | 1111 | 60 | 2.55% | No | 30 | 30 | 1 | Moderate | Severe | Plummet |
| Comparative Example 3 | 20 | 600 | 1000 | 1.0 | 5.0 | 1000 | 5.0 | 1111 | 60 | 1.50% | Yes | 30 | 30 | 1 | Slight | Severe | 55% |
| Comparative Example 4 | 20 | 600 | 1000 | 10.0 | 5.0 | 1000 | 50.0 | 1111 | 60 | 1.50% | Yes | 30 | 30 | 1 | Severe | Moderate | 40% |
| Comparative Example 5 | 20 | 600 | 1000 | 5.0 | 0.2 | 1000 | 1.0 | 1111 | 60 | 1.50% | Yes | 30 | 30 | 1 | Slight | Severe | 60% |

| | $W_1$ (%) | $K_1$ | $S=K_1+20W_1$ ($\mu m^2$) | P (MPa·s) | $W_2$ (%) | $K_2$ | $H=K_2W_2P/S$ ($\mu m$) | $\sigma$ ($\mu m$) | y ($\mu m$) | $S/(\sigma-y)\times100\%$ | Whether $1.4\%\leq S/(\sigma y)\times100\%\leq1.6\%$ is satisfied | $T_{11}$ ($\mu m$) | $T_{12}$ ($\mu m$) | $T_{11}/T_{12}$ | Interface lithium precipitation | Interface purple spot severity | Capacity retention rate |
|---|---|---|---|---|---|---|---|---|---|---|---|---|---|---|---|---|---|
| Comparative Example 6 | 20 | 600 | 1000 | 5.0 | 12.0 | 1000 | 60.0 | 1111 | 60 | 1.50% | Yes | 30 | 30 | 1 | Severe | Severe | Plummet |
| Comparative Example 7 | 20 | 600 | 1000 | 1.0 | 12.0 | 1000 | 12.0 | 1111 | 60 | 1.50% | Yes | 30 | 30 | 1 | Severe | Severe | Plummet |
| Comparative Example 8 | 20 | 600 | 1000 | 10.0 | 0.2 | 1000 | 2.0 | 1111 | 60 | 1.50% | Yes | 30 | 30 | 1 | Severe | Severe | Plummet |
| Comparative Example 9 | 20 | \ | \ | 5.0 | 5.0 | \ | \ | \ | 60 | \ | \ | 30 | 30 | 1 | None | Severe | 50% |
| Comparative Example 10 | 20 | 600 | 1000 | 5.0 | 5.0 | 1000 | 25.0 | 1111 | 60 | 1.50% | Yes | 30 | 30 | 1 | Slight | Severe | Plummet |
| Comparative Example 11 | 20 | 200 | 600 | 5.0 | 5.0 | 1000 | 41.7 | 1111 | 60 | 0.90% | No | 30 | 30 | 1 | Moderate | Severe | 45% |
| Comparative Example 12 | 20 | 1000 | 1400 | 5.0 | 5.0 | 1000 | 17.9 | 1111 | 60 | 2.10% | No | 30 | 30 | 1 | Moderate | Severe | 50% |
| Comparative Example 13 | 20 | 600 | 1000 | 5.0 | 5.0 | 700 | 17.5 | 1111 | 60 | 1.50% | Yes | 50 | 10 | 5 | Slight | Severe | 50% |
| Comparative Example 14 | 20 | 600 | 1000 | 5.0 | 5.0 | 1300 | 32.5 | 1111 | 60 | 1.50% | Yes | 50 | 10 | 5 | Moderate | Severe | 55% |

Note: "\" in Table 1 indicates no corresponding parameter; in Comparative Example 10, the polyurethane binder is replaced with polyacrylic acid, and $W_2$ in Comparative Example 10 in Table 1 indicates a percentage of the polyacrylic acid; and "Plummet" in Table 1 indicates that in the "Test of capacity retention rate after 500 cycles", the capacity of the lithium-ion battery directly decays to 0 and the battery cannot be charged.

EP 4 734 165 A2

From Examples 1-1 to 1-15, Examples 1-29 to 1-36, and Comparative Examples 1 to 14, it can be seen that by introducing the polyurethane binder in the second material layer, providing the groove in the negative electrode active material layer, controlling the mass percentages of the silicon element and the polyurethane binder in the second material layer within the ranges provided in this application, and ensuring that the cross-sectional area and depth of the groove, the percentage of the silicon element, the percentage of the polyurethane binder, and the viscosity of the electrolyte satisfy the relationships provided in this application, the secondary battery in some embodiments of this application exhibits a less severe purple spot and lithium precipitation situation on the surface of the negative electrode plate, indicating better kinetic performance of the secondary battery; and the capacity retention rate after 500 charge-discharge cycles of the secondary battery is higher, indicating better cycling performance of the secondary battery. In contrast, in the secondary battery of the comparative examples, no polyurethane binder is used in the second material layer, or no groove is provided in the negative electrode active material layer, or the mass percentage of the silicon element or the mass percentage of the polyurethane binder is not within the ranges provided in this application, or the cross-sectional area of the groove and the percentage of the silicon element do not satisfy the relationships provided in this application, or the depth and cross-sectional area of the groove, the percentage of the polyurethane binder, and the viscosity of the electrolyte do not satisfy the relationships provided in this application, so that a more severe purple spot and lithium precipitation situation is exhibited on the surface of the negative electrode plate in the secondary battery, or the capacity retention rate of the secondary battery after 500 charge-discharge cycles is lower, indicating that the secondary battery of the comparative examples cannot achieve both good kinetic performance and good cycling performance. In the secondary battery of Comparative Example 11, the value of $K_1$ is below the range specified in this application, which results in an excessively small cross-sectional area of the groove, an excessively large depth of the groove, and an excessively small width of the groove, reducing the infiltration degree of the electrolyte to the negative electrode active material layer, thereby affecting the kinetic performance and cycling performance of the secondary battery. In the secondary battery of Comparative Example 12, the value of $K_1$ is above the range specified in this application, which results in an excessively large cross-sectional area of the groove and reduced lithium ion intercalation sites in the negative electrode active material layer, so that some lithium ions deintercalating from the positive electrode plate fail to intercalate into the negative electrode active material layer, thereby exacerbating lithium precipitation on the surface of the negative electrode plate. Additionally, an excessively large cross-sectional area of the groove or an excessively small depth of the groove also reduces the infiltration degree of the electrolyte to the negative electrode active material layer, thereby affecting the kinetic performance and cycling performance of the secondary battery. In the secondary battery of Comparative Examples 13 and 14, when the value of $K_2$ is not within the range specified in this application, the depth of the groove is either too small or too large, and with a constant cross-sectional area of the groove, the groove width is either too large or too small, which results in an excessively small or large depth-to-width ratio of the groove, reducing the infiltration degree of the electrolyte to the negative electrode active material layer, thereby affecting the kinetic performance and cycling performance of the secondary battery. Specifically, in Comparative Example 13, the depth of the groove is too small, and when the groove has a constant cross-sectional area, an excessively large width of the groove results in an excessively small depth-to-width ratio of the groove, reducing the infiltration degree of the electrolyte to the negative electrode active material layer; and in Comparative Example 14, the depth of the groove is too large, and when the groove has a constant cross-sectional area, an excessively small width of the groove also reduces the infiltration degree of the electrolyte to the negative electrode active material layer, thereby affecting the kinetic performance and cycling performance of the secondary battery.

The mass percentage Wi% of the silicon element in the second material layer and the cross-sectional area of the groove typically affect the kinetic performance and cycling performance of the secondary battery. From Examples 1-1 to 1-9, Examples 1-29 to 1-32, and Comparative Examples 1, 2, 11, and 12, it can be seen that the secondary battery in which the mass percentage of the silicon element in the second material layer and the cross-sectional area of the groove are within the ranges provided in this application exhibits a better purple spot and lithium precipitation situation on the surface of the negative electrode plate, as well as a higher capacity retention rate after 500 charge-discharge cycles of the secondary battery, indicating good kinetic performance and cycling performance of the secondary battery.

The viscosity of the electrolyte, the mass percentage $W_2$% of the polyurethane binder in the second material layer, and the depth H of the groove typically affect the kinetic performance and cycling performance of the secondary battery. From Examples 1-1, 1-10 to 1-15 and 1-33 to 1-36, and Comparative Examples 3 to 8, 13, and 14, it can be seen that secondary battery in which the viscosity of the electrolyte, the mass percentage $W_2$% of the polyurethane binder in the second material layer, and the depth H of the groove are within the ranges provided in this application exhibits a better purple spot and lithium precipitation situation on the surface of the negative electrode plate, as well as a higher capacity retention rate after 500 charge-discharge cycles of the secondary battery, indicating good kinetic performance and cycling performance of the secondary battery.

The spacing between two adjacent grooves, the thickness of the negative electrode active material layer, and their relationship with the cross-sectional area of the groove typically affect the kinetic performance and cycling performance of the secondary battery. From Examples 1-1 to 1-9, 1-16 to 1-20, 1-37, and 1-38, it can be seen that the secondary battery in which the spacing between two adjacent grooves, the thickness of the negative electrode active material layer, and their relationship with the cross-sectional area of the groove are within the ranges provided in this application exhibits a higher maximum non-lithium-precipitation rate, a better purple spot and lithium precipitation situation on the surface of the negative electrode plate, as well as a higher capacity retention rate after 500 charge-discharge cycles of the secondary battery, indicating good kinetic performance and cycling performance of the secondary battery.

The thicknesses of the first material layer and the second material layer typically affect the kinetic performance and cycling performance of the secondary battery. From Examples 1-1 and 1-21 to 1-28, it can be seen that the secondary battery in which the thicknesses of the first material layer and the second material layer are within the ranges provided in this application exhibits a better purple spot and lithium precipitation situation on the surface of the negative electrode plate, as well as a higher capacity retention rate after 500 charge-discharge cycles of the secondary battery, indicating good kinetic performance and cycling performance of the secondary battery.

**Table 2**

|  | Molecular weight of polyurethane binder | Interface lithium precipitation | Interface purple spot severity | Capacity retention rate |
|---|---|---|---|---|
| Example 1-1 | 10000 | None | None | 92% |
| Example 2-1 | 23600 | None | None | 92% |
| Example 2-2 | 100000 | None | None | 88% |
| Example 2-3 | 8000 | None | None | 85% |
| Example 2-4 | 101000 | None | None | 85% |

The molecular weight of the polyurethane binder typically affects the kinetic performance and cycling performance of the secondary battery. From Examples 1-1 and 2-1 to 2-4, it can be seen that the secondary battery in which the molecular weight of the polyurethane binder is within the range provided in this application exhibits a better purple spot and lithium precipitation situation on the surface of the negative electrode plate, as well as a higher capacity retention rate after 500 charge-discharge cycles of the secondary battery, indicating good kinetic performance and cycling performance of the secondary battery.

**Table 3**

|  | First negative electrode active material | Silicon-containing material | Average particle size of silicon-containing material ($\mu$m) | Interface lithium precipitation | Interface purple spot severity | Capacity retention rate |
|---|---|---|---|---|---|---|
| Example 1-1 | Artificial graphite | Silicon-carbon compound | 17 | None | None | 92% |
| Example 3-1 | Hard carbon | Silicon-carbon compound | 17 | None | None | 87% |
| Example 3-2 | Artificial graphite | Silicon-oxygen compound | 17 | None | None | 89% |
| Example 3-3 | Artificial graphite | Silicon-carbon compound | 5 | None | None | 88% |
| Example 3-4 | Artificial graphite | Silicon-carbon compound | 30 | Slight | None | 85% |
| Example 3-5 | Artificial graphite | Silicon-carbon compound | 2 | None | Moderate | 83% |

(continued)

|  | First negative electrode active material | Silicon-containing material | Average particle size of silicon-containing material ($\mu$m) | Interface lithium precipitation | Interface purple spot severity | Capacity retention rate |
|---|---|---|---|---|---|---|
| Example 3-6 | Artificial graphite | Silicon-carbon compound | 35 | Moderate | Slight | 80% |

The type of the first negative electrode active material typically affects the kinetic performance and cycling performance of the secondary battery. From Examples 1-1 and 3-1, it can be seen that the secondary battery in which the type of the first negative electrode active material is within the range provided in this application exhibits a better purple spot and lithium precipitation situation on the surface of the negative electrode plate, as well as a higher capacity retention rate after 500 charge-discharge cycles of the secondary battery, indicating good kinetic performance and cycling performance of the secondary battery.

The type of the silicon-containing material typically affects the kinetic performance and cycling performance of the secondary battery. From Examples 1-1 and 3-2, it can be seen that the secondary battery in which the type of the silicon-containing material is within the range provided in this application exhibits a better purple spot and lithium precipitation situation on the surface of the negative electrode plate, as well as a higher capacity retention rate after 500 charge-discharge cycles of the secondary battery, indicating good kinetic performance and cycling performance of the secondary battery.

The average particle size of the silicon-containing material typically affects the kinetic performance and cycling performance of the secondary battery. From Examples 1-1 and 3-3 to 3-6, it can be seen that the secondary battery in which the average particle size of the silicon-containing material is within the range provided in this application exhibits a higher maximum non-lithium-precipitation rate, a better purple spot and lithium precipitation situation on the surface of the negative electrode plate, as well as a higher capacity retention rate of the secondary battery, indicating good kinetic performance and cycling performance of the secondary battery.

It should be noted that, in this specification, relational terms such as first and second are used only to distinguish one entity or operation from another entity or operation, and do not necessarily require or imply any actual relationship or order between these entities or operations. Moreover, the terms "include", "comprise", or any other variations thereof are intended to cover non-exclusive inclusion, such that a process, method, article, or device that includes a series of elements not only includes those elements but also includes other elements not expressly listed, or includes elements inherent to such process, method, article, or device.

All embodiments in this specification are described in a related manner, and the same or similar parts between these embodiments can refer to each other, with each embodiment focusing on the differences from other embodiments.

The above descriptions are only preferred embodiments of this application and are not intended to limit this application. Any modifications, equivalent substitutions, improvements, and the like made within the spirit and principles of this application shall be included within the protection scope of this application.

**Claims**

1. A secondary battery, comprising an electrolyte and a negative electrode plate (100), **characterized in that** a viscosity of the electrolyte is P MPa·s;

   the negative electrode plate (100) comprises a negative electrode current collector (10) and a negative electrode active material layer (20) disposed on at least one surface of the negative electrode current collector (10);
   the negative electrode active material layer (20) comprises a first material layer (21) and a second material layer (22), and the first material layer (21) is disposed between the negative electrode current collector (10) and the second material layer (22);
   the first material layer (21) comprises a first negative electrode active material, and the first negative electrode active material comprises no silicon element;
   the second material layer (22) comprises a second negative electrode active material and a polyurethane binder, the second negative electrode active material comprises a silicon-containing material, and a mass percentage of silicon element in the second material layer (22) is $W_1$%, and a mass percentage of the polyurethane binder in the second material layer (22) is $W_2$%;
   along a thickness direction of the negative electrode plate (100), the negative electrode active material layer (20) is provided with at least one groove (30); a cross-sectional area of the groove (30) is S $\mu m^2$, and a depth of the groove (30) is H $\mu m$; wherein

$$1\leq W_1\leq 50, \text{ and } S=K_1+20W_1;$$

$$400\leq K_1\leq 800;$$

$$1\leq W_2\leq 10, 2\leq P\leq 8, \text{ and } H=K_2W_2P/S;$$

and

$$800\leq K_2\leq 1200.$$

2. The secondary battery according to claim 1, **characterized in that** $15\leq W_1\leq 30$, and/or $500\leq K_1\leq 700$.

3. The secondary battery according to claim 1, **characterized in that** $2\leq W_2\leq 8$, and/or $900\leq K_2\leq 1100$.

4. The secondary battery according to claim 1, **characterized in that** the polyurethane binder has a molecular formula of $(-NHCOO-)_n$, and the polyurethane binder has a molecular weight of m, wherein $10000\leq m\leq 100000$.

5. The secondary battery according to claim 1, **characterized in that** the first negative electrode active material comprises at least one of artificial graphite, natural graphite, hard carbon, or soft carbon.

6. The secondary battery according to claim 1, characterized the silicon-containing material comprises at least one of pure silicon, a silicon-carbon compound, or a silicon-oxygen compound.

7. The secondary battery according to claim 6, **characterized in that** the silicon-containing material has an average particle size of 5 $\mu m$ to 30 $\mu m$.

8. The secondary battery according to claim 1, **characterized in that** a spacing between two adjacent grooves (30) is $\sigma$ $\mu m$, wherein $420\leq\sigma\leq 3400$;
the negative electrode active material layer (20) has a thickness of y $\mu m$, wherein $30\leq y\leq 100$; and

$$1.4\%\leq S/(\sigma y)\times 100\%\leq 1.6\%.$$

9. The secondary battery according to claim 1, characterized in that the first material layer (21) has a thickness of 25 $\mu m$ to 95 $\mu m$; and the second material layer (22) has a thickness of 5 $\mu m$ to 50 $\mu m$.

10. The secondary battery according to claim 1, **characterized in that** a thickness of the first material layer (21) is $T_{21}$ and a thickness of the second material layer (21) is $T_{22}$, and $1\leq T_{21}/T_{22}\leq 10$.

11. The secondary battery according to claim 1, **characterized in that** the silicon-containing material has an average particle size of 5 $\mu m$ to 30 $\mu m$.

12. An electronic apparatus, **characterized in that** the electronic apparatus comprises the secondary battery according to any one of claims 1 to 11.

**100**

FIG. 1

**100**

FIG. 2